# EUROPEAN PATENT APPLICATION

(11) **EP 4 851 853 A1**
(43) Date of publication of application: **09.12.2026**
(21) Application number: 25180374.8
(22) Date of filing: 03.06.2025
(51) Int. Cl.: G06K 19/077

(54) **MOUNTING STRUCTURE FOR AN RFID TAG, RFID MOUNTING SYSTEM AND METHOD FOR ASSEMBLING AN RFID MOUNTING SYSTEM**

(71) Applicant: Assa Abloy AB, 107 23 Stockholm (SE)
(72) Inventor: FURTER, Urs, 1845 Noville (CH); KAPP, Hugo, 74500 Saint-Gingolph (FR)
(74) Representative: Kramer Barske Schmidtchen Patentanwälte PartG mbB

(57) **Abstract**

A mounting structure (100) for securing an RFID tag (20) on a straplike body (30), such as a wristband comprises a first component (5) and a second component (6). Each of the first and second components (5, 6) have a contact surface (25, 26) for placing the mounting structure (100) on a body such as a wrist, a recess (15, 16) for receiving a respective side of the RFID tag (20), and a connecting means (10, 11) for connecting the first with the second component (5, 6) such that the recesses (15, 16) are facing each other. The connecting means (10, 11) are configured to allow a relative movement of the first component (5) to the second component (6), reducing a distance (D2) between the recesses (15, 16), and to fix the first and second components (5, 6) in a holding position, in which the RFID tag (20) is receivable by both recesses (15, 16).

## Description

### Technical Field

The present disclosure generally relates to mounting structures for RFID tags. In particular, the present disclosure relates to a mounting structure for securing an RFID tag on a straplike body such as a wristband, an RFID mounting system and a method for assembling such an RFID mounting system.

### Background

RFID systems are widely used in various manufacturing and service applications. RFID systems include one or more RFID tags positioned on bodies (such as garments or the human body) for identification purposes, and an RFID reader for reading the RFID tags and thus identifying the tagged body.

Various mounting structures for positioning RFID tags on the body to be identified are known. These mounting structures may be simple adhesive strips or complex assemblies having multiple parts. Mounting structures may limit the available space for the RFID tag due to their design, thereby restricting the size of the RFID tag, which in turn affects the size of the RFID antenna and thus the effective read range of the antenna.

Electromagnetic waves are used for the communication between the one or more RFID tags and the RFID reader, with different wavelength ranges being used depending on the specific application, each wavelength range offering unique performance characteristics. One example of such a wavelength range is the ultra-high frequency (UHF) range, which operates between 300 MHz and 5 GHz. The UHF range allows a communication between an RFID tag and an RFID reader over several meters, making it suitable for applications requiring extended read ranges. When using the UHF range, the positioning of the RFID tags and the design of the mounting structure may have a significant impact on the UHF communication, as UHF communication is susceptible to interference from conductive obstacles.

The present disclosure is directed, at least in part, to providing a mounting structure for an RFID tag that is simple and cost-effective while having a high performance.

### Summary of the Disclosure

According to a first aspect of the present disclosure, a mounting structure for securing an RFID tag on a straplike body such as a wristband has a first component and a second component. Each of the first and second components has a contact surface for placing the mounting structure on a body such as a wrist, a recess for receiving a respective side of the RFID tag, and a connecting means for connecting the first with the second component such that the recesses are facing each other. The connecting means are configured to allow a relative movement of the first component to the second component, reducing a distance between the recesses. Further, the connecting means are configured to fix the first and second components in a holding position, in which the RFID tag is receivable by both recesses.

In a second aspect of the present disclosure, an RFID mounting system has a mounting structure according to the first aspect, an RFID tag received by the recesses of the mounting structure in the holding position and a straplike body such as a wristband positioned between the RFID tag and the connecting means of the mounting structure.

In a third aspect of the present disclosure, a method for assembling an RFID tag to a straplike body comprises the steps of : providing a first component and a second component, wherein the first and second components are movably connected by connecting means, and each of the first and second components has a recess for receiving a respective side of an RFID tag, placing a strap-like body on top of the connecting means, placing the RFID tag on top of the strap-like body, moving the first component towards the second component such that the RFID tag is inserted into and held by the recesses, and the strap-like body is sandwiched between the RFID tag and the connecting means. Other features and aspects of the present disclosure will be apparent from the following description and the accompanying drawings.

### Brief Description of the Drawings

Fig. 1 shows a perspective top view of the first component of an exemplary embodiment of the mounting structure according to the present disclosure.
Fig. 2 shows the first component of Fig. 1 in a side view.
Fig. 3 shows the exemplary embodiment of the mounting structure of which the first component is shown in Fig. 1.
Fig. 4 is a perspective top view on the mounting structure 100 of Fig 3.
Fig. 5 is a perspective top view on the mounting structure 100 of Fig. 4, with an added straplike body 30 positioned on the connecting means.
Fig. 6 is a perspective top view on the mounting structure 100 of Fig. 4, with an RFID tag 20 received by the recess 15, 16 and a straplike body 30 positioned between the connecting means and the RFID tag 20.
Fig. 7 is a top view of Fig. 6, wherein the straplike body 30 is omitted.
Fig. 8 shows a cross-sectional view of an RFID mounting system 200 having a mounting structure, a straplike body 30 and an RFID tag 20.
Fig. 9 shows the RFID mounting system 200 from Fig. 8 in a bottom view, in which the straplike body 30 in a portion between the connecting means is pulled down, making the RFID tag 20 visible.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that by positioning the RFID tag in a distance to the body (such as a wrist) it is attached to may significantly reduce interference, thereby enhancing the RFID tag's performance. It has been realized that a mounting structure for securing RFID tags on straplike bodies (such as wristbands) may be designed such that its connecting means intrinsically provide a spacer between the RFD tag and the body (wrist of wearer of the straplike body), thus creating a distance between the RFID tag and the body.

Further, it has been realized that a mounting structure which allows a relative movement of its components to reduce the distance between recesses for receiving the RFID tag may simplify mounting of the RFID tag and maximize the available space for the RFID tag. By maximizing the available space within the mounting structure larger RFID tags may be used, which may improve signal range. The same mounting structure may be used to attach different RFID tags, preferably printed with various designs. These RFID tags may be printed using methods such as inkjet printing on demand. The RFID tags may be flat or plate-shaped, allowing for easy attachment and removal from the mounting structure. This versatility enables customization and adaptability for different applications, as users can easily interchange RFID tags with different motifs according to their needs.

The mounting structure according to the present disclosure may have two identical components, allowing for the manufacture of components with a single design. Having two identical components simplifies production, as only one type of component needs to be created. In this exemplary embodiment, for assembly, two identical components may be used. The two identical components may be configured to be turned 180° in relation to each other when assembled to form the mounting structure. By using only a single component, the mounting structure is very straightforward and may be manufactured cost-effectively. This approach minimizes production complexity and cost.

The mounting structure according to the present disclosure optimally positions the RFID tag with respect to the body to reduce interference from the body while maximizing the space available for the RFID tag (especially the antenna of the RFID tag) and while providing a simple and cost-effective structure. The mounting structure is applicable in various industries where RFID tags are used for identification, tracking, and access control, such as logistics, inventory management, entrance and access systems for entertainment attractions and personal identification systems. The design ensures optimal performance regardless of the application environment.

The mounting structure secures an RFID tag on a straplike body. In other words: the mounting structure holds the RFID tag in place on a straplike body or ensures that the RFID tag is positioned adjacent to a straplike body and does not move, slip or detach during normal use.

The straplike body may be any elongated structure (having a longitudinal extension direction) designed to encircle or be attached to a body such as a wrist. The straplike body may be made of materials such as silicone, fabric, leather, or plastic and may be used across various industries and uses. Straplike bodies for example include wristbands and bracelets for identification and access control, watch straps, belts, ankle bands for fitness tracking or medical monitoring, straps for bags and backpacks or medical bands for patient identification or monitoring.

The mounting structure has a top-bottom extension direction, which extends essentially perpendicular to the contact surface (respectively the wrist on which the contact surface rests). The "bottom" being the side of the mounting structure where the contact surface is positioned, i.e., the mounting structure is positioned on the wrist with a bottom portion in which the contact surface is provided.

In a top view of the mounting structure, that is, looking in top-bottom extension direction onto the mounting structure, the mounting structure has a longitudinal extension direction and a width extension direction. The longitudinal extension direction and the width extension direction are essentially parallel to the contact surface (respectively the wrist on which the contact surface rests). Either in the longitudinal extension direction or in the width extension direction, the first component and the second component of the RFID mounting structure can be moved relative to each other. For example, the mounting structure may allow relative movement of the first component to the second component in the width extension direction, so that the first and second components can be moved toward and away from each other in the width extension direction. Alternatively, the RFID mounting structure can also be configured so that the relative movement of the first and second components occurs in the longitudinal extension direction. In the context of the present disclosure, the length extension direction of the mounting structure corresponds to the longitudinal extension direction of the straplike body.

In the present disclosure, a system comprising a mounting structure, an RFID tag secured by the mounting structure, and a straplike body is referred to as an RFID mounting system. In the RFID mounting system, the RFID tag is positioned in the recesses of the first and second components of the mounting structure. The first and second components are in the holding position. The straplike body is arranged between the RFID tag and the connecting means of the mounting structure. In the RFID mounting system, the connecting means, the recesses, and the RFID tag are matched to each other such that there is a space (clearance) between the RFID tag and the connecting means large enough to allow the straplike body to pass through. Depending on the application of the RFID mounting system, this space may be designed to either securely clamp the straplike body (e.g., the space is the same size or even a bit smaller than a cross-section of the straplike body) or provide a bit of leeway for it (e.g., the space is larger than a cross-section of the straplike body). The connecting means may be provided with a recessed portion that serves as a seat for the straplike body. The straplike body is enclosed by the RFID tag and the mounting structure.

The RFID mounting system is configured to securely attach an RFID tag to a straplike body. To use the mounting system, the mounting system first is in an open position. In the open position the distance between the recesses is larger than in the holding position. The straplike body is placed on top of the connecting means. Then, the RFID tag is placed on top of the straplike body. By moving the recesses towards each other into the holding position, the RFID tag is inserted into and held by the recesses. In the holding position, the straplike body is sandwiched between the RFID tag and the connecting means. As described above, the straplike body may be hold in place by clamping between the RRID tag and the connecting means or the straplike body may be hold more loosely as it can slightly move in the space between the RFID tag and the connecting means. In both cases, the straplike body is enclosed on all sides either by the connecting means or the RFID tag.

The mounting structure in a top view may form a rectangular frame with a centrally arranged receiving area for the RFID tag. The mounting structure is designed to be placed on a part such as a wrist. The RFID tag, which is held by the mounting structure, is substantially held in a parallel position to the contact surface respectively the surface of the wrist. The movement direction of the first and second components towards each other to reduce the distance between the recesses and to receive or clamp or hold the RFID tag between the recesses may be perpendicular to a longitudinal extension direction of the strap-like body. In other words, the movement direction of the first and second components towards each other to reduce the distance between the recesses may be in the width extension direction of the mounting structure.

The mounting structure has a first and a second component. The first and second components may be made of materials such as PVC, ABS, Polycarbonate and may be manufactured by injection-molding. Each of the first and second components has a contact surface, a connecting means and a recess.

In the context of the mounting structure for securing an RFID tag on a straplike body, the term "recess" refers to a space or channel or slot within the first respectively second component configured to receive and hold the RFID tag. The recess is preferably closed at its ends or preferably at least narrowed to ensure that the RFID tag received by the recess cannot slip out of the recess. The recess must be deep enough to prevent the RFID tag from slipping out (fall out) of the recess. The recess may be any type of recess and may take on various forms, such as rectangular, V-shaped, or U-shaped, tailored to accommodate a respective side of the specific shape and size of the RFID tag being used. The shape of the recess may ensure that the recess may guide and align the RFID tag during insertion, facilitating proper installation and operation. Additionally, the recess may have features like protrusions or lips that function as a retention mechanism to prevent the RFID tag from slipping out or moving once inserted in the recess of the first and second component. This ensures that the RFID tag remains securely in place. The recess's form and function may ensure that the RFID tag is both accessible and securely positioned within the mounting structure.

In an exemplary embodiment, the recess substantially has a shape of a cuboid. In top view on the mounting structure, the cuboid has a length in the range of 10 mm to 60 mm, a width in the range of 0.5 mm to 5 mm, and a height in the range of 0.5 mm to 2 mm. The length of the cuboid refers to the longer side of the rectangle formed by the cuboid in top view on the mounting structure. The width of the cuboid refers to the shorter side of the rectangle formed by the cuboid in top view on the mounting structure. The height of the cuboid refers to the extension of the cuboid in top-down direction of the mounting structure. Or in other words, the length of the cuboid forming the recess refers to its extension in longitudinal direction of the mounting structure, the width of the cuboid forming the recess refers to its extension in width direction of the mounting structure and the height of the cuboid forming the recess refers to its extension in top-bottom direction. The recesses may also be configured to receive RFID tags with other than a rectangular shape. For example, RFID tags with an oval or circular shape could be employed, with the recesses designed to securely receive and hold the specific contour and dimensions of these RFID tags. The recess of course may be adapted to the shape of the RFID tags or more specifically to the shape of the respective sides of the RFID tags received by the recess.

The connecting means is configured to allow a relative movement of the first and second components, reducing the distance between the recesses. The connecting means are designed to facilitate a straightforward assembly process by allowing the movement of the first and second components towards each other. This movement reduces the distance between the recesses, which allows to first position the RFID tag between the recess and then to secure the RFID tag by means of the recess. During assembly, this mechanism enables the user to easily align and position the RFID tag within the recess. As the first and second components are moved laterally towards each other, the recess may grip the sides of the RFID tag and may securely clamp or receive the RFID tag between each other. This lateral movement not only simplifies the mounting process but also ensures that the RFID tag is held firmly without the need for additional fasteners or tools. The design is intended to provide a reliable and efficient method for securing the RFID tag, allowing for quick and easy installation while maintaining the RFID tag's stability and performance in its operational environment. The connecting means could also be configured such that they are able to accommodate various widths of RFID tags. This means that the connecting components can be adjusted or moved closer together than might be necessary for some tags, allowing the system to securely hold RFID tags of different sizes. This flexibility in the design of the connecting means ensures that the mounting system can be used with a wide range of RFID tags, accommodating variations in their widths and providing a secure fit regardless of the specific dimensions of the tags. This adaptability is particularly useful in applications where tags of different sizes need to be used interchangeably.

The connecting means are configured to fix the first and second components in a holding position, in which the RFID tag is receivable by both recesses. The term "to fix" in the context of the present disclosure means that the RFID tag is reliably held in the holding position by a holding force. The holding force depends on the respective field of application and the forces occurring in this respective field of application. The holding force is dimensioned such that the RFID tag is not released when the mounting structure is used under normal conditions. For example, the first and second component may be fixed in the holding position by a holding force in the range of 10 to300 N, preferably in the range of 50 to100 N. Such a holding force has proven to be advantageous for many applications in order to reliably secure the RFID tag between the recess of the first and second component. The holding force between the engaged connecting means may for example be realized by a press-fit connection or an oversize fitting, utilizing friction to hold components together. Alternatively to a press-fit connection, deformable ribs or structures could be provided, or additional means such as adhesive could be used.

The connecting means of the first component is positioned between the recess and the contact surface of the first component. The connecting means of the second component is positioned between the recess and the contact surface of the second component. Thus, the connecting means are positioned between the contact surfaces and the RFID tag which is received by the recess of the first and second components in holding position. The connecting means function as spacer, maintaining a consistent gap between the RFID tag (which is received by the recess) and the contact surface.

The connecting means on one component may be designed as clips or other mechanical fasteners and may consist of multiple elements. The connecting means allow the components to move towards each other, securely clamping or receiving or holding the RFID tag in place. It is understood by those skilled in the art that essentially any known connecting means may be used, provided they allow the first and second components, with their recess facing each other, to be moved towards each other into the holding position and that they may fix the first and second component in the holding position.

Each of the first and second components has a contact surface for placing the mounting structure on a body such as a wrist. This contact surface may be designed to provide a stable interface between the mounting structure and the surface it rests upon, ensuring comfort and reducing slippage during movement. The contact surface may be typically shaped and sized to conform to the contours of the body, distributing pressure evenly to enhance the wearer's comfort. Additionally, the material of the contact surface may be selected to minimize irritation and maximize grip, further securing the mounting structure in place. For example, a layer may be applied to the mounting structure in the region of the contact surface to further improve comfort and grip. This layer may be made of a soft, non-irritating material that minimizes skin irritation while maximizing adhesion, ensuring the mounting structure remains securely in place. The contact surface can also be adapted to the shape of a wrist or arm by being slightly curved. For example, the contact surface may be concavely curved such that the concave shape of the contact surface is adapted to the convex shape of a wrist. Such a structure provides a secure positioning of an RFID tag (which may have a plate-like shape) while allowing for a good fit of the mounting structure on the user's wrist.

The connecting means of the first and second components may be configured to fix the first and second component in multiple holding positions, allowing RFID tags of different sizes to be receivable by both recesses.

The advantage of this embodiment is that it provides versatility and adaptability, enabling the mounting structure to accommodate a wide range of RFID tag sizes. This flexibility reduces the need for multiple mounting structures tailored to specific RFID tag dimensions, thereby reducing manufacturing costs. Additionally, it allows for easy upgrades or changes to RFID tags without requiring modifications to the mounting structure itself, ensuring extended usability in various applications.

The first and second components may be configured such that they can be moved out of the holding position only by destroying the connecting means. A fastener may be used to secure the first and second component in the holding position. Such configuration may be used as a tamper-evident security feature. By requiring the destruction of the connecting means to release the RFID tag, the mounting system ensures that any unauthorized removal of the RFID tag is immediately apparent. This is particularly beneficial in applications where security and integrity of the RFID tag are critical, such as in asset tracking or access control, as it helps to prevent tampering and unauthorized access. This may for example be achieved by using barbed structures that allow the components to slide together but are destroyed when attempting to pull the components apart.

In case, the first and second components are movable out of the one or more holding positions without destroying the connecting means, a mounting structure which is reusable may be provided. By enabling the RFID tag to be released without damaging the connecting means, the components may be reused multiple times, making the system more sustainable and cost-effective. This feature is particularly useful in environments where RFID tags may need to be frequently replaced or upgraded, such as in inventory management or product lifecycle tracking. This may for example be achieved by a press-fit connection between the connecting means of the first component and of the second component.

According to an exemplary embodiment, each recess of the first and second components has a minimum distance from the contact surface of more than 2 mm, preferably more than 3 mm, even more preferably more than 4 mm.

The advantage of that embodiment is that ensuring a minimum distance from the contact surface helps maintain the RFID tag's position away from the body the RFID tag is attached to. This reduces interference and enhances signal range. When close to the human body, spacing of the RFID tag is critical for reducing electromagnetic interference, which may affect the performance of the RFID tag. By maintaining this distance, the system ensures that the RFID tag operates efficiently, transmitting data without obstruction, leveraging the antenna's gain for maximum read range. The specified ranges have proven to be particularly advantageous.

According to an exemplary embodiment, each connecting means of the first and second components has a male element and a complementary female element such that the male element of the first component is inserted into the female element of the second component when fixing the first and second components in the holding position.

The male element fits into the female element. The male part may be a protrusion, while the female part may be a corresponding recess or cavity. This design allows for a secure connection, where the male element slides or snaps into the female element, locking the components together. The male and female elements are designed to fit together, reducing the risk of accidental disconnection or misalignment. This design facilitates easy assembly and disassembly. A further advantage is that not only one but more connecting elements are used enhancing the structural integrity of the mounting system. By utilizing not only one but multiple elements, the system provides multiple contact points, which reliably hold the strap between the RFID tag and the connecting means, enhancing the overall stability and security of the attachment.

The female element may be formed as a hollow cylindrical body, while the male element is a solid cylindrical body configured to be inserted into the hollow interior of the female element. These two components may be secured together using a press-fit connection, which simplifies the assembly process and ensures that the **RFID** tag remains securely positioned in the holding position.

**In** principle, any number of connecting elements (including more than two) can be used, as long as they ensure a reliable connection between the first and second components. Furthermore, they must provide a support surface for the strap-like body.

The first and second components of the mounting structure may be fixed in the holding position by means of a press-fit connection. Using a press-fit connection and connecting means having a male element and a complementary female element, the male element may have an oversize in the range of 10 to 200 micrometers relative to the female element for providing a holding force between the first and second components when engaged. This oversize allows for a friction-based connection, enhancing the stability and strength of the connection by creating a press-fit condition. Such oversize may maintain the integrity of the connection and preventing unintentional disengagement under standard operational forces. The oversize of the male element is quantified by measuring its diameter or width at the point of intended engagement and comparing it to the corresponding internal diameter or width of the female element. This measurement is taken at the widest part of the male element that engages with the female element.

According to an exemplary embodiment, the contact surface of the mounting structure is formed at least partly by the connecting means of the first and second component.

The advantage of that embodiment is that integrating the connecting means into the contact surface provides additional stability and support, ensuring the RFID tag is securely held against shifting or displacement during use, thus maintaining optimal performance and reliability.

With reference to the RFID mounting system according to the present disclosure, any type of known RFID tags may be used. In an exemplary embodiment, the RFID tags have a cuboid shape with a thickness in the range of 0.4 mm to 1.5 mm. The thickness direction of the RFID tag refers to the extension from the front side to the rear side of the RFID tag. However, it is understood by those skilled in the art that other shapes of RFID tags may also be used, with the recesses being appropriately adapted to accommodate these shapes.

In an exemplary embodiment, a passive UHF RFID tag is used. The advantage of that embodiment is that utilizing an UHF RFID tag further improves performance by taking advantage of the read range. Passive UHF RFID tags are ideal for applications requiring long-range reading and high-speed data transfer. The system is designed to maximize these capabilities, ensuring that the RFID tag's enhanced performance is fully realized, crucial for applications such as inventory management and logistics. Such passive UHF RFID tags may for example be used for identification and access to an entertainment attraction. By increasing read range, these features may be activated more naturally without prompting the wearer to intentionally come within range of an installed reader.

According to an exemplary embodiment of the RFID mounting system, in a top view of the RFID tag, the mounting structure laterally protrudes for not more than 5 mm, preferably not more than 3 mm, more preferably not more than 1 mm, more preferably not more than 0.5 mm beyond the RFID tag. This lateral protrusion (in width extension direction of the mounting structure and/or in longitudinal extension direction of the mounting structure) is measured from an outer edge of the RFID tag to an outer edge of the mounting structure. As is clear to a skilled person, the outer edge of the RFID tag may be invisible from the outside, as it lies within the recess and thus is concealed by the mounting structure.

The advantage of that embodiment is that limiting the lateral extension (protrusion) of the mounting structure in relation to the RFID tag ensures that the RFID tag occupies most of the available space, maximizing its size and performance capabilities. This design allows that for a given size for the mounting structure, a large RFID tag may be used such that superior performance may be delivered. Lateral protrusion may be a protrusion in the width extension direction of the mounting structure or in the longitudinal extension direction of the mounting structure.

According to an exemplary embodiment of the RFID mounting system, the RFID tag has a substrate with a front side and a back side opposite to the front side in a thickness direction. Further, the RFID tag has an antenna and an integrated circuit, both embedded in the substrate. The substrate has an opaque portion between the front side and the antenna and/or the integrated circuit and has a transparent portion between the back side and the antenna and/or the integrated circuit such that the antenna and/or the integrated circuit is at least partially visible from the back side of the substrate. RFID tags having a substrate with opaque and transparent portions, such as substrates formed by several opaque and transparent layers, are well known to the skilled person. The RFID tag is positioned in the recess of the RFID mounting system such that the back side of the substrate is facing towards the contact surfaces. The mounting structure is configured such that it does not overlap with the back side of the substrate for more than 50%, preferably not more than 30%, even more preferably not more than 10%, when viewed in the thickness direction of the substrate.

According to this embodiment, the mounting structure allows the internal components of the substrate (antenna and/or integrated circuit) to be seen without removing the RFID tag from the mounting structure, when viewed from the back side of the substrate in thickness direction or in other words, when viewed from the contact surface of the mounting structure towards the RFID tag. An overlap in the thickness direction means that the RFID tag is not covered by the mounting structure when viewed from the contact surfaces towards the RFID tags. This means that even when the RFID tag is secured within the mounting structure, parts of the RFID tag remain visible when viewed from the contact surfaces towards the RFID tags. The mounting structure ensures that the back side of a secured RFID tag is partly exposed, allowing for easy inspection or identification without being obscured by the mounting structure. The limitation of the overlap from the mounting structure and the antenna and/or integrated circuit ensures that the visibility of the antenna and/or integrated circuit is maintained. As described above, the straplike body is positioned between the RFID tag and the connecting means of the mounting structure. Accordingly, during normal use, the back side of the substrate would not be visible when viewed in thickness direction as it is covered by the straplike body. The visibility discussed above refers to a situation in which the straplike body is pulled down far enough from the RFID tag from between the connecting means to allow the backside of the substrate to be visible. When the straplike body is pulled down sufficiently to expose the back side of the substrate, the antenna and/or the integrated circuit becomes visible (to the human eye). Such a state may correspond to a state in which the back side of the RFID tag (already secured by the mounting structure) need to be checked before it is attached to the wrist. The substrate has an opaque portion between the front side and the antenna and/or the integrated circuit such that the antenna and/or the integrated circuit is not visible from the front side of the substrate. The opaque portion may for example a white ink portion allowing identification features to be added (engraved).

Having a visible RFID antenna (integrated circuit) in an RFID mounting system is beneficial in terms of inspection and security. The visibility of the antenna allows for straightforward inspection, enabling easy checks to ensure that the antenna is intact and functioning correctly. Additionally, the visible antenna serves as a security feature. By examining the form of the antenna, one may confirm the authenticity of the RFID tag and detect any tampering or counterfeit attempts. This enhances the overall security and integrity of the system, providing reassurance that the RFID tag is genuine and functioning as intended. In addition, such an embodiment may have a marking such as a laser engraving on the antenna and/or the integrated circuit, the marking being visible from the backside of the substrate in case the straplike body is pulled down sufficiently to expose the back side of the substrate and he antenna and/or the integrated circuit becomes visible. Such marking may be used to provide information directly on the antenna, visible through the substrate. An alternative to laser engraving may be inkjet printing. These markings offer additional benefits, such as enabling quick identification, further augmenting the utility and security of the RFID system.

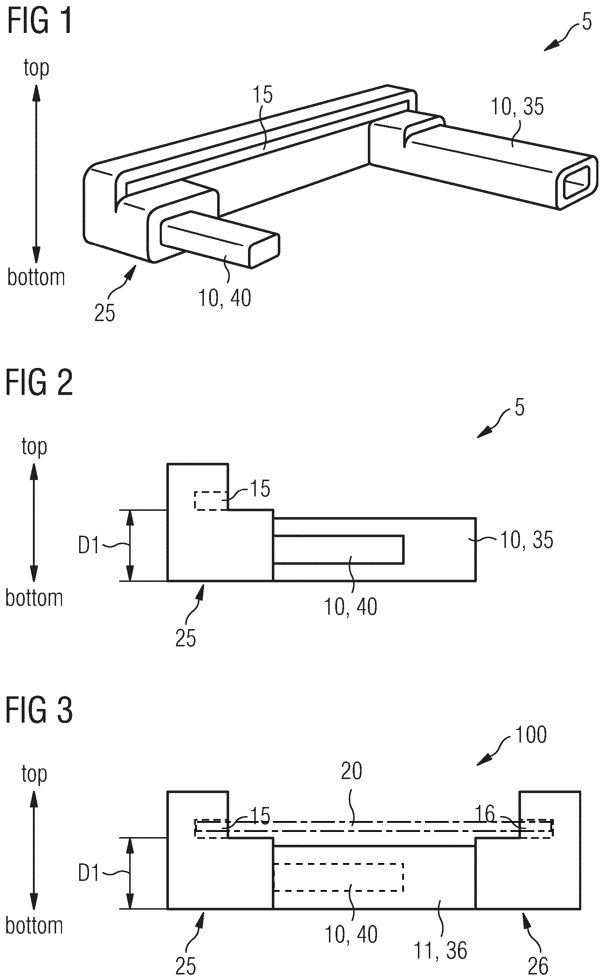

Fig. 1 shows a perspective top view of the first component 5 of an exemplary embodiment of the mounting structure according to the present disclosure. Of course, it may also be a second component of the mounting structure since the first and second components are identical. The first component 5 has a recess 15 and a connecting means 10. The connecting means 10 has a male element 40 and a female element 35. The female element 35 is a hollow body having a rectangular shape, while the male element 40 is a solid rectangular body configured to be inserted into the hollow interior of the female element 35 (of another component). A bottom side of the first component 5 (not visible) forms the contact surface 25 of the first component 5. The contact surface 25 comes into contact with the body (such as a human body) it is placed on.

Fig. 2 shows the first component 5 of Fig. 1 in a side view. The first component 5 has a connecting means 10, which include a female element 35 and the male element 40. The bottom side of the first component 5 forms the contact surface 25. A recess 15, which is not visible in this view, is illustrated with a dashed line. The recess 15 has a minimum distance D1 to the contact surface 25. Thus, when an RFID tag is received by the recess 15, the RFID tag is spaced apart from the contact surface 25 respectively the body it is placed on (such as a wrist) by the minimum distance D1.

Fig. 3 shows the mounting structure 100 in a side view. The first component 5 is connected to the second component 6. The bottom side of the first component 5 and the bottom side of the second component form the contact surfaces 25, 26. The recess 15, 16, which are not visible in this view, are illustrated with a dashed line. An RFID tag as received by recess 15, 16 in the holding position is illustrated in dashed line. The connecting means are positioned between the contact surfaces 25, 26 and the RFID tag 20.

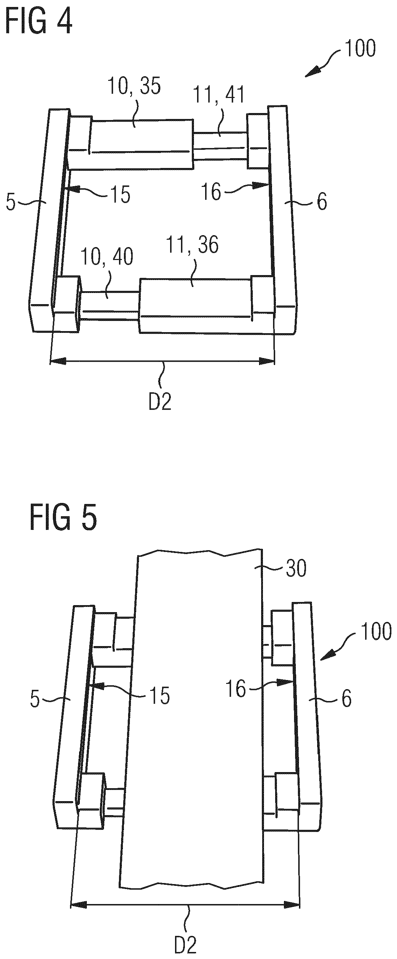

Fig. 4 is a top view of a mounting structure 100 having a first component 5 and a second component 6. The first and second components 5, 6 are identical and correspond to the first component 5 shown in Figs. 1 and 2. The two identical first and second component are turned by 180° with respect to each other. The connecting means 10 of the first component 5 has a female element 35 and a male element 40. The connecting means 11 of the second component 6 has a female element 36 and a male element 41. The female element 35 and the male element 40 of the first component 5 interlock with the male element 41 respectively the female element 41 of the second component 5 such that they allow the first and second components 5, 6 to move towards each other, reducing the distance between the recesses of the first and second components. The mounting structure 100 is not yet positioned in the holding position for the RFID tag. The minimum distance D2 between the recesses 15, 16 is greater than it is in the holding position of the first and second components 5, 6. The minimum distance D2 as shown in Fig. 3 allows an RFID tag to be positioned between the first and second components 5, 6 before the first and second components 5, 6 are moved towards each other to hold the RFID tag.

Fig. 5 shows the mounting structure of Fig. 4 and in addition shows a straplike body 30. The straplike body 30 is positioned on top of the connecting means 10, 11 and between the recesses 15, 16 of the first component 5 and the second component 6. The minimum distance D2 between the recesses 15, 16 is greater than it is in the holding position of the first and second components 5, 6.

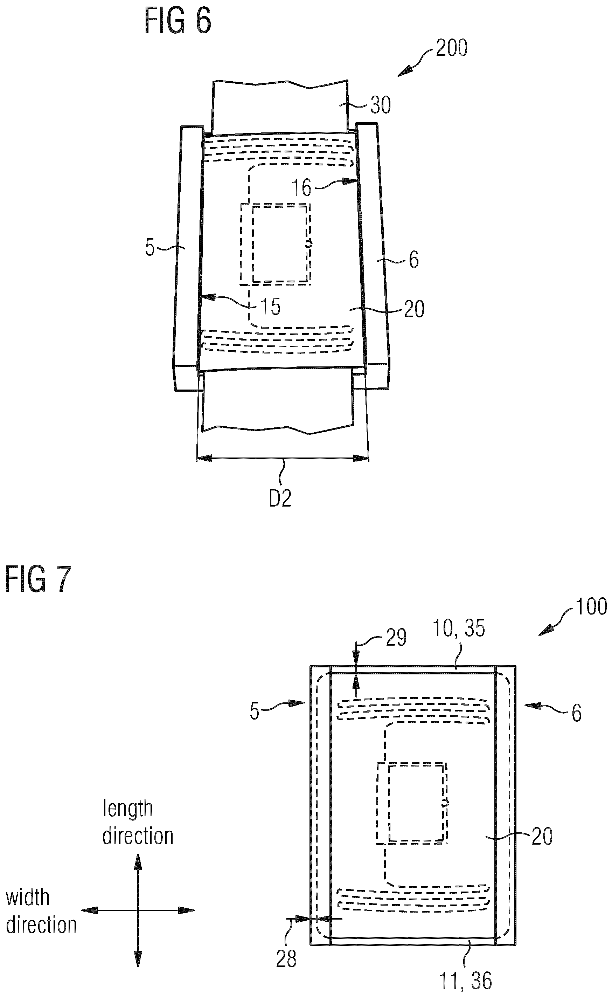

Fig. 6 shows the mounting structure 100 of Fig. 4 and in addition shows a straplike body 30 and an RFID tag 20. Accordingly, Fig. 6 shows an RFID system according to the present disclosure. In contrast to Fig. 4 and Fig. 5, the minimum distance D2 between the recesses 15, 16 is now reduced as the first and second components 5, 6 are now in the holding position. The RFID tag 20 is positioned on top of the straplike body 30. In dashed line (as not visible in top view), the integrated circuit and the antenna of the RFID tag are illustrated. The RFID tag 20 is received by the recesses 15, 16 of the first and second components 5, 6. The straplike body 30 is positioned between the connecting means 10, 11 and the RFID tag 20.

Fig. 7 shows the mounting structure of Fig. 4 in top view. The mounting structure 100 secures an RFID tag 20 but does not include a straplike body. The first and second components 5, 6 of the mounting structure 100 are in the holding position. In dashed line (as not visible in top view), the integrated circuit and the antenna of the RFID tag are illustrated. When viewed from the top, the mounting structure 100 laterally protrudes beyond the RFID tag 20 by a lateral protrusion in width extension direction 28 and a lateral protrusion in longitudinal extension direction 29 of the mounting structure 100.

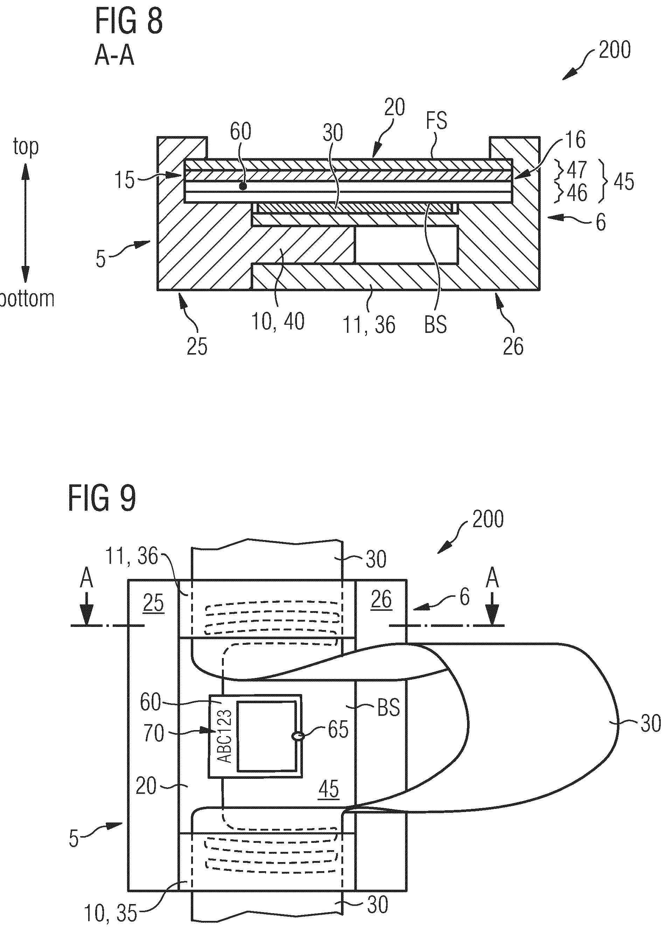

Fig. 8 schematically shows a cross-sectional view of an exemplary embodiment of an RFID mounting system 200 according to the present disclosure. An RFID tag 20 is accommodated in the recesses 15, 16 of the first component 5 respectively second component 6. The RFID tag 20 includes a substrate 45 with an embedded antenna 60 and integrated circuit 65. In the cross-sectional view of Fig. 8, the integrated circuit 65 is not visible. The substrate 45 has a front side FS and a back side BS. The substrate 45 has an opaque portion 47 positioned between the front side FS and the antenna 60 respectively integrated circuit 65, and a transparent portion 46 positioned between the back side BS and the antenna 60 respectively integrated circuit 65. A straplike body 30 is positioned between the connecting means 10, 11 of the first and second components 5, 6. The bottom surface of the first and second components 5, 6 forms a contact surface 25.

Fig. 9 shows the RFID mounting system 200 from Fig. 8 in a bottom view. In Fig. 9, the contact surface of the RFID mounting system 200 is **visible.** The straplike body 30 extends behind the connecting means 10, 11. Between the connecting means 10, 11 of the first and second components 5, 6, the straplike body 30 is pulled down such that the back side BS of the substrate 45 of the RFID tag 20 is visible. In the substrate 45, an antenna 60 and an integrated circuit 65 is embedded and partly visible. On the antenna 60, a laser engraving (a marking 70) is provided which is also visible in bottom view.

The terms 'about', 'approximately', 'circa', 'substantially' or 'generally' as used herein in connection with a measurable value such as a parameter, quantity, shape, time duration or the like, include deviations or variations of ± 10% or less, preferably ± 5% or less, further preferably ± 1% or less and further preferably ± 0.1% of or from the respective value, provided that such deviations are still technically reasonable when the disclosed invention is put into practice. It is expressly pointed out that the value to which the term 'approximately' refers is disclosed as such expressly and in particular. The indication of ranges by initial and final values includes all those values and fractions of these values which are included by the respective range, as well as its initial and final values.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### List of references

- 5:: first component
- 6:: second component
- 10, 11:: connecting means
- 15, 16:: recess
- 20:: RFID tag
- 25, 26:: contact surface
- 28:: lateral protrusion in width extension direction
- 29:: lateral protrusion in longitudinal extension direction
- 30:: straplike body
- 35, 36:: male element
- 40, 41:: female element
- 45:: substrate
- 46:: transparent portion of substrate
- 47:: opaque portion of substrate
- 60:: antenna
- 65:: integrated circuit
- 70:: marking
- 100:: mounting structure
- 200:: RFID mounting system

- D1:: minimum distance between a recess and the contact surface
- D2:: minimum distance between the recesses
- FS:: front side
- BS:: back side
- T:: thickness direction

## Claims

1. A mounting structure (100) for securing an RFID tag (20) on a straplike body (30) such as a wristband, the mounting structure (100) comprising a first component (5) and a second component (6), each of the first and second components (5, 6) having
a contact surface (25, 26) for placing the mounting structure (100) on a body such as a wrist,
a recess (15, 16) for receiving a respective side of the RFID tag (20), and
a connecting means (10, 11) for connecting the first with the second component (5, 6) such that their recesses (15, 16) are facing each other, wherein the connecting means (10, 11) are configured to
- allow a relative movement of the first component (5) to the second component (6), reducing a distance (D2) between the recesses (15, 16), and
- to fix the first and second components (5, 6) in a holding position, in which the RFID tag (20) is receivable by both recesses (15, 16).

2. The mounting structure (100) according to claim 1, wherein the first and second components (5, 6) are identical.

3. The mounting structure (100) according to any one of the preceding claims, wherein the first and second components (5, 6) are rotated 180° to each other in the holding position.

4. The mounting structure (100) according to any one of the preceding claims, wherein the connecting means (10, 11) of the first and second components (5, 6) are configured to fix the first and second components (5, 6) in multiple holding positions, allowing that RFID tags (20) of different sizes are receivable by both recesses (15, 16).

5. The mounting structure (100) according to any one of the preceding claims, wherein the first and second components (5, 6) are fixed in the holding position by a holding force in the range of 10 to 300 N, preferably in the range of 50 to100 N.

6. The mounting structure (100) according to claims 1-5, wherein the first and second components (5, 6) can be separated from each other only by destroying the connecting means (10).

7. The mounting structure (100) according to claims 1-5, wherein the first and second components (5, 6) are movable out of the one or more holding positions to release the RFID tag (20) without destroying the connecting means (10).

8. The mounting structure (100) according to any one of the preceding claims, wherein each recess (15, 16) of the first and second component (5, 6) has a minimum distance (D1) from the contact surface (25) of more than 2 mm, preferably more than 3 mm, even more preferably more than 4 mm.

9. The mounting structure (100) according to any one of the preceding claims, wherein each connecting means (10, 11) of the first and second components (5, 6) comprises a male element (40, 41) and a complementary female element (35, 36) such that the male element (40) of the first component (5) is inserted into the female element (36) of the second component (6) when fixing the first and second components (5, 6) in the holding position.

10. The mounting structure (100) according to any one of the preceding claims, wherein the first and second components (5, 6) are fixed in the holding position by means of a press-fit connection.

11. The mounting structure (100) according to any one of the preceding claims, wherein the contact surface (25) is formed at least partly by the connecting means (10, 11) of the first and second components (5, 6).

12. An RFID mounting system (200), comprising:
- a mounting structure (100) according to any one of claims 1-11,
- an RFID tag (20) received by the recesses (15. 16) of the mounting structure (5) in the holding position, and
- a straplike body (30) such as a wristband positioned between the RFID tag (20) and the connecting means (10, 11) of the mounting structure (5).

13. The RFID mounting system (200) according to claim 12, wherein the RFID tag (20) is a passive UHF RFID tag.

14. The RFID mounting system (200) according to any one of claims 12-13, wherein in a top view of the RFID tag (20), the mounting structure (100) laterally protrudes for not more than 5 mm, preferably not more than 3 mm, more preferably not more than 1 mm, more preferably not more than 0.5 mm beyond the RFID tag (20), the lateral protrusion being measured from an outer edge of the RFID tag (20) to an outer edge of the mounting structure (200).

15. The RFID mounting system (200) according to any one of claims 12-14, the RFID tag (20) comprising:
a substrate (45) with a front side (FS) and a back side (BS) opposite the front side (FS) in a thickness direction (T),
an antenna (60) and an integrated circuit (65), both embedded in the substrate (45), wherein
the substrate (45) has an opaque portion (47) between the front side (FS) and the antenna (60) such that the antenna (60) and/or the integrated circuit (65) is not visible from the front side (FS) of the substrate (45),
the substrate (45) has a transparent portion (46) between the back side (BS) and the antenna (60) and/or the integrated circuit (65) such that the antenna (60) and/or the integrated circuit (65) is at least partly visible from the back side (BS) of the substrate (45),
the RFID tag (20) is positioned in the recesses of the RFID mounting system (200) such that the back side (BS) of the substrate (45) is facing towards the contact surface (25), and,
when viewed in the thickness direction (T) of the substrate (45), the mounting structure is not overlapping with the back side (BS) of the substrate (45) for more than 50%, preferably not more than 30%, even more preferably not more than 10%.

16. The RFID mounting system (200) according to any one of claims 12-15, wherein a marking (70) such as a laser engraving is provided on the antenna (60) and/or the integrated circuit (65), the marking (70) being visible from the back side (BS) of the substrate (45).

17. A method for assembling an RFID mounting system (200), comprising the following steps:
providing a first component (5) and a second component (6), wherein the first and second components (5, 6) are movably connected by connecting means (10, 11) and each of the first and second components (5, 6) has a recess (15, 16) for receiving a respective side of an RFID tag (20);
placing a strap-like body (30) on top of the connecting means (10, 11);
placing the RFID tag (20) on top of the strap-like body (30); and
moving the first component (5) towards the second component (6) such that:
- the RFID tag (20) is inserted into and held by the recesses (15, 16), and
- the strap-like body (30) is sandwiched between the RFID tag (20) and the connecting means (10, 11).
